(19) Europäisches Patentamt
European Patent Office
Office européen des brevets

(11) Numéro de publication: **0 132 188**
**B1**

(12) **FASCICULE DE BREVET EUROPEEN**

(45) Date de publication du fascicule du brevet: **09.12.87**

(51) Int. Cl.⁴: **C 01 B 21/097**, C 01 B 21/098, C 08 G 79/02

(21) Numéro de dépôt: **84401423.3**

(22) Date de dépôt: **04.07.84**

(54) **Polychlorophosphazènes linéaires possédant un groupement terminal dichlorothiophosphoryle, procédé de préparation de ces composés et leur utilisation.**

(30) Priorité: **06.07.83 FR 8311264**

(43) Date de publication de la demande: **23.01.85 Bulletin 85/4**

(45) Mention de la délivrance du brevet: **09.12.87 Bulletin 87/50**

(84) Etats contractants désignés: **CH DE GB LI NL SE**

(56) Documents cités:
**EP - A - 0 026 685**
**DE - A - 2 234 373**
**US - A - 3 348 927**

**CHEMISCHE BERICHTE, 105e année, 1972, pages 1439-1445, Weinheim, DE; H.W. ROESKY: "Lineare und cyclische Chlorphosphazene"**
**ZEITSCHRIFT FÜR ANORGANISCHE UND ALLGEMEINE CHEMIE, vol. 325, 1963, pages 287-301, Leipzig, DD: M. BECKE-GOEHRING et al.: "Die Verbindungen mit der Zusammensetzung P2NCl7"**

(73) Titulaire: **SOCIETE NATIONALE ELF AQUITAINE, Tour Aquitaine, F-92400 Courbevoie (FR)**

(72) Inventeur: **Abou Chakra, Taher, 3-70, Rue du Vivat, F-59650 Villeneuve d'Ascq (FR)**
Inventeur: **De Jaeger, Roger, 8, Rue des Buissons Gruson, F-59152 Chereng (FR)**

(74) Mandataire: **Boillot, Marc, SOCIETE NATIONALE ELF AQUITAINE Division Propriété Industrielle Tour Elf, F-92078 Paris la Défense Cédex 45 (FR)**

**EP 0 132 188 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention est relative à des polychlorophosphazènes linéaires, et plus particulièrement à des polychlorophosphazènes linéaires possédant un groupement terminal dichlorothiophosphoryle. Elle se rapporte encore à un procédé pour la préparation de ces polychlorophosphazènes et concerne également leur utilisation.

De nombreux travaux font état de la préparation de polychlorophosphazènes cycliques qui est relativement facile à réaliser, étant donné la tendance des composés inférieurs de la série des chlorophosphazènes à se cycliser. Toutefois les polychlorophosphazènes linéaires présentent un intérêt économique nettement plus grand que les polychlorophosphazènes cycliques, en raison de leurs possibilités d'applications très étendues, en tant que matériaux ayant des applications du type de celles des silicones, des matières plastiques et des élastomères naturels ou synthétiques, en tant que matériaux antiflamme et anticombustion ou additifs conférant des propriétés antiflamme et anticombustion aux matériaux et substances auxquels ils sont ajoutés, en tant que revêtements, en particulier revêtements étanches, en tant que matériaux utilisables dans le domaine biomédical, en tant que fertilisants, ou encore en tant que lubrifiants. En outre, certains élastomères obtenus par diverses substitutions sur des polychlorophosphazènes linéaires se sont avérés présenter une excellente tenue aux basses températures, ainsi qu'à l'égard des réactifs corrosifs. L'application majeure des polychlorophosphazènes réside dans leur utilisation comme matériaux de départ pour l'obtention de polyorganophosphazènes, qui sont des polymères présentant des propriétés remarquables.

Quelques procédés de préparation de polychlorophosphazènes linéaires ont été proposés dans l'art antérieur. C'est ainsi que L.G. LUND, N.L. PADDOCK, J.E. PROCTOR et H.T. SEARLE (J. Chem. Soc. London, 1960, p. 2542) on décrit l'obtention de polychlorophosphazènes suivant le schéma réactionnel ci-après:

$$PCl_5 + NH_4Cl \rightarrow \frac{1}{n}\ (PNCl_2)_n + HCl$$

en opérant dans un solvant consistant en tétrachloréthane symétrique. Toutefois ce schéma implique un grand nombre d'étapes réactionnelles, dont le rendement est rarement quantitatif, et représente un mode opératoire long e onéreux, car le produit brut auquel il donne naissance est un mélange de composés cycliques, présents à raison de 90%, et de composés linéaires du type $PCl_5(PNCl_2)_n$, où n n'excède pas 20, dans une proportion de 10%.

Pour obtenir des polymères linéaires plus longs, les composés cycliques sont alors traités par des solvants pour séparer le trimère et le tétramère, dont on extrait, à l'aide de solvants appropriés, le $(NPCl_2)_3$ pur qui est soumis à une polymérisation thermique sous pression réduite, à une température de 250 °C, pendant deux jours, pour donner un polymère $(PNCl_2)_n$ linéaire avec un taux de conversion optimum de 70% (H.R. ALLOCK, R.L. KUGEL, K.J. VALAN – Inorg. Chem., 1966, 5, p. 1709).

Une telle méthode indirecte de synthèse requiert un nombre important d'opérations, rarement quantitatives, et nécessite en outre l'utilisation de quantités importantes de solvants coûteux, ce qui rend son prix de revient prohibitif et pèse lourdement sur le coût des polychlorophosphazènes obtenus.

De plus, cette méthode ne permet d'obtenir que des polychlorophosphazènes à chaîne très longue, de l'ordre de 15 000 motifs $(NPCl_2)$ environ, et elle ne peut pas être contrôlée pour permettre d'obtenir des polychlorophosphazènes dont la longueur de chaîne peut être déterminée à volonté, et notamment des polychlorophosphazènes linéaires à chaîne courte ou moyenne, c'est-à-dire comportant par exemple de 4 à 1000 motifs ou plus.

Dans le brevet français N° 7 924 037 (publication N° 2 466 435) du 27–09–1979, on a proposé un procédé de préparation directs de polychlorophosphazènes linéaires à chaînes contrôlées courtes ou moyennes par chauffage du composé P-trichloro N-dichlorophosphorylmonophosphazène (formule brute $P_2NOCl_5$), les polychlorophosphazènes obtenus présentant un groupement terminal dichlorophosphoryle.

On connait également le P-trichloro N-dichlorothiophosphorylmonophosphazène (formule brute $P_2NSCl_5$) ainsi que les dimère et trimère en dérivant, ces derniers étant obtenus par des méthodes de synthèse indirectes. Ainsi M. BECKE-GOEHRING et W. LEHR (Z. Anorg. Allgem. Chem. 1963, 325, pages 287 à 301), ont préparé le dichlorothiophosphorylpentachlorodiphosphazène $Cl_2(S)P[N{=}PCl_2]_2\ Cl$ par réaction d'$H_2S$ sur le composé ionique $(Cl_3P{=}N{-}PCl_2{=}NPCl_3)^+PCl_6^-$ obtenu par réaction de $PCl_5$ avec $NH_4Cl$ dans un solvant à faible constante diélectrique; il n'a cependant pas été possible à ces auteurs d'obtenir des homologues supérieurs dans lesquels le nombre des motifs récurrents $(N{=}PCl_2)$ est supérieur à 2, en raison de la formation de polychlorophosphazènes cycliques par poursuite de la réaction du composé ionique avec $NH_4Cl$. H.W. ROESKY (Chem. Ber. 1972, 105 (4), pages 1439 à 1445) a également proposé de synthétiser les premiers membres de la série des thiophosphorylchlorophosphazènes linéaires par allongement pas-à-pas de la chaîne P=N=P en faisant réagir successivement des thiophosphorylchlorophosphazènes à chaîne courte, avec l'hexaméthyldisilazane et $PCl_5$. Toutefois, il n'est pas parvenu à aller au-delà du triphosphazène de formule $Cl_2(S)P[N{=}PCl_2]_3Cl$.

Les dichlorothiophosphorylchlorophosphazènes obtenus par l'une ou l'autre des deux méthodes indirectes de synthèse précitées ne sont guère susceptibles d'applications industrielles en raison de leurs très faibles masses moléculaires. En outre lesdites méthodes de synthèse ne permettent pas

de préparer des produits de masses moléculaires plus élevées.

L'invention a comme objet des dichlorothiophosphorylpolychlorophosphazènes linéaires, dont les chaînes renferment un nombre d'uniteés récurrentes ($NPCl_2$) supérieure à 3 et susceptible d'être contrôlé à volonté pour permettre l'obtention de chaînes de toutes longueurs désirées on fonction des applications envisagées, lesdits polychlorophosphazènes étant préparés directement à partir du composé $P_2NSCl_5$ par un procédé de synthèse simple à mettre en œuvre.

Les dichlorothiophosphorylpolychlorophosphazènes linéaires suivant l'invention répondent à la formule (I) ci-après:

$$Cl_2(S)[NPCl_2)_nCl \quad (I)$$

dans laquelle n est un nombre égal ou supérieur à 4, la valeur de n pouvant être contrôlée à volonté pour l'obtention de chaînes de toutes longueurs moyennes désirées.

Ainsi n peut prendre des valeurs allant de 4 jusqu'à 1000 par exemple ou même jusqu'à des valeurs supérieures pouvant atteindre 5000 ou plus.

Les dichlorothiophosphorylpolychlorophosphazènes de formule (I) possèdent des masses moléculaires moyennes en nombre ($\overline{M}n$), qui sont supérieures à 630 et peuvent avoir toutes valeurs désirées atteignant par exemple 120 000 voire même 600 000 ou plus.

La possibilité de contrôler à volonté la valeur de n, c'est-à-dire la longueur des chaînes du polymère et par conséquent la masse moléculaire moyenne en nombre de ce dernier, permet de conférer certaines propriétés physiques désirées aux polymères finalement obtenus et de faire varier ces propriétés dans une gamme étendue.

Suivant l'invention, les polychlorophosphazènes répondant à la formule (I) obtenus en polycondensant $P_2NSCl_5$ par chauffage dans des conditions de pression allant de 10 Pa à $10^6$ Pa et de température d'au moins 120 °C propres à libérer $PSCl_3$, avec contrôle de la quantité de $PSCl_3$ libérée pour atteindre au moins 75% de la quantité molaire de $P_2NSCl_5$ soumise à la polycondensation de manière à obtenir le degré de condensation désiré au moins égal à 4, c'est-à-dire la masse moléculaire moyenne en nombre requise supérieure à 630, pour le dichlorothiophosphorylpolychlorophosphazène formé.

Sans être lié par cette hypothèse, on pense que la polycondensation de $P_2NSCl_5$, dont la formule développée peut s'écrire

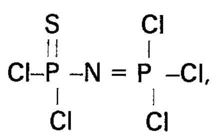

s'effectue conformément au schéma récationnel ci-après:

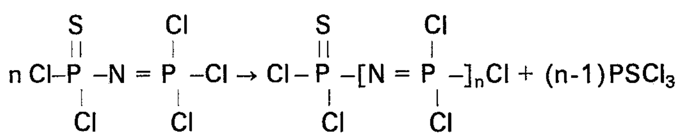

(III)

La formule (III) est supposée être la formule développée des dichlorothiophosphorylpolychlorophosphazènes ayant la formule brute (I).

Les polychlorophosphazènes suivant l'invention, obtenus par polycondensation par chauffage de $P_2NSCl_5$, sont exempts de phosphazènes cycliques et en outre ils ne renferment pas non plus d'impuretés soufrées et notamment de soufre élémentaire.

Dans le procédé de production de polychlorophosphazènes par chauffage de $P_2NOCl_5$ décrit dans le brevet français N° 7 924 037, aucune dégradation des produits de réaction n'est à craindre. Par contre on sait que les composés organiques du soufre tels que $PSCl_3$ sont des composés donneurs de soufre et l'on pouvait s'attendre à ce qu'un chauffage de $P_2NSCl_5$, dans les conditions d'une polycondensation qui libère $PSCl_3$, conduise à l'obtention d'un polymère pollué par une quantité plus ou moins grande d'impuretés soufrées, et notamment de soufre élémentaire, et de ce fait impropre à toute utilisation. L'obtention, par chauffage de $P_2NSCl_5$, d'un polymère exempt de toute impureté soufrée et en particulier de soufre élémentaire présente donc un caractère inattendu.

Avantageusement la quantité molaire de $PSCl_3$ libérée durant la polycondensation par chauffage de $P_2NSCl_5$ représente au moins 90%, de la quantité molaire de $P_2NSCl_5$ soumise à la polycondensation.

Bien que l'on puisse opérer sous des pressions pouvant atteindre $10^6$ Pa, la polycondensation de $P_2NSCl_5$ est mise en œuvre le plus souvent à pression atmosphérique ou sous pression réduite, c'est-à-dire sous des pressions pouvant aller de 10 Pa à $10^5$ Pa. Lorsque la polycondensation est réalisée sous pression réduite, on peut opérer entre 10 Pa et $35\times10^3$ Pa et de préférence entre 50 Pa et $20\times10^3$ Pa.

Au cours de la polycondensation la pression peut varier et il est possible d'effectuer ladite polycondensation en partie à pression atmosphérique et en partie sous pression réduite. La polycondensation peut, par exemple, débuter à la pression atmosphérique et se poursuivre sous une

pression réduite, comprise notamment entre 10 Pa et $35 \times 10^3$ Pa plus particulièrement entre 50 Pa et $20 \times 10^3$ Pa.

Lorsque la polycondensation débute à pression atmosphérique et se poursuit sous pression réduite, la durée de la polycondensation à pression atmosphérique représente environ 70 à 90% de la durée totale de la polycondensation, tandis que la durée de la polycondensation sous pression réduite représente environ 30 à 10% de ladite durée totale.

Les températures de polycondensation peuvent varier assez sensiblement en fonction des pressions utilisées. En pratique, on utilise des températures d'au moins 120 °C et plus spécialement allant de 140 °C à 350 °C lorsque la polycondensation est effectuée sous des pressions réduites allant d'environ 10 Pa à environ $35 \times 10^3$ Pa et plus particulièrement d'environ 50 Pa à environ $20 \times 10^3$ Pa, tandis qu'en opérant sous des pressions égales à la pression atmosphérique ou voisines de cette dernière des températures d'au moins 150 °C et plus particulièrement allant de 160 °C à 350 °C sont appropriées. Avantageusement, quelle que soit la pression de polycondensation comprise dans l'intervalle allant d'environ 10 Pa à environ $10^5$ Pa, on peut opérer à des températures d'au moins 150 °C, tout particulièrement de 160 °C à 350 °C et plus spécialement de 170 °C à 300 °C.

Lorsque la polycondensation est effectuée en partie à pression atmosphérique et en partie sous pression réduite, et notamment débute à pression atmosphérique puis se poursuit sous pression réduite comme indiqué précédemment, la phase de polycondensation à pression atmosphérique est réalisée à des températures d'au moins 150 °C, et plus particulièrement allant de 160 °C à 350 °C, tandis que la phase de polycondensation sous pression réduite est mise en œuvre à des températures d'au moins 120 °C et plus spécialement de 140 °C à 350 °C. Avantageusement les deux phases de polycondensation peuvent être effectuées à des températures d'au moins 150 °C, tout particulièrement allant de 160 °C à 350 °C et plus spécialement de 170 °C à 300 °C.

Durant le cours de la polycondensation la température du milieu réactionnel peut être maintenue sensiblement constante ou au contraire varier suivant une loi prédéterminée. Par exemple, la polycondensation peut être initiée à une température allant de 240 °C à 350 °C pendant une durée allant de 10 à 30% de la durée totale de la polycondensation, puis la température du milieu réactionnel est abaissée graduellement jusqu'à une valeur allant de 150 °C à 235 °C et ensuite maintenue à cette valeur jusqu'à la fin de la polycondensation.

La durée de la polycondensation dépend, entre autres, de la température à laquelle la polycondensation est mise en œuvre, ladite durée étant d'autant plus courte que la température est plus élevée. Des durées de polycondensation allant de 1 heure à environ 40 heures permettent généralement d'obtenir le résultat recherché.

La polycondensation contrôlée suivant l'invention peut être réalisée, au moins en partie, sous un courant de gaz inerte, par exemple, sous un courant d'azote anhydre, ce qui favorise le départ de $PSCl_3$ et réduit, de ce fait, la durée de la polycondensation.

Il est également préférable de mettre en œuvre la polycondensation sous agitation.

La polycondensation suivant l'invention peut être effectuée jusqu'à élimination pratiquement complète de $PSCl_3$ sans observer de réaction de branchement.

Le degré de condensation obtenu dépend non seulement des températures et pressions utilisées, mais encore d'autres paramètres tels que, notamment, la durée de chauffage, le volume traité, les conditions d'agitation et l'atmosphère dans laquelle se déroule la polycondensation, lesdits paramètres pouvant être choisis en vue de l'obtention du résultat optimal recherché.

Le produit brut de la réaction de polycondensation peut être purifié, si besoin est, par traitement au moyen d'un solvant des phosphazènes cycliques, par exemple tel que l'éther de pétrole, qui est en même temps solvant des polychlorophosphazènes linéaires à chaîne courte (oligomères pour lesquels n est inférieur à 4).

L'absorption relative au groupement P=S étant suffisamment importante en spectroscopie infrarouge, on peut utiliser cette technique pour suivre le déroulement de la polycondensation. En outre, le soufre étant un élément suffisamment lourd, on peut employer la fluorescence X pour déterminer le degré de condensation moyen du polychlorophosphazène de formule (I) résultant de la polycondensation, cette détermination étant effectuée à partir de la mesure du rapport d'intensité $IP_{k\alpha}/IS_{k\alpha}$.

Comme indiqué précédemment, les dichlorothiophosphorylpolychlorophosphazènes suivant l'invention renferment moins de 5% de polychlorophosphazènes cycliques et de polychlorophosphazènes linéaires à chaîne courte, qui sont éliminé par le traitement de purification précité, et ne contiennent pas d'impuretés soufrées et notamment de soufre élémentaire.

Le produit qui précipite au cours du traitement de purification a été identifié comme étant constitué de hauts polymères de formule (I), par les méthodes suivantes:

– Spectroscopie IR:

Le spectre IR des polychlorophosphazènes de formule (I) présente:

– une absorption intense et large à 1300 $cm_{-1}$ caractéristique de l'élongation P=N;

– une absorption à 760 $cm^{-1}$ caractéristique de la déformation δ(PNP) dans le polymère;

– deux absorptions d'intensité forte à 590 $cm^{-1}$ et moyenne à 540 $cm^{-1}$ relatives aux élongations de la liaison P–Cl (ces attributions sont faites par comparaison avec les travaux de MANLEY et WILLIAMS (Polymer, 1969, 10, page 307) concernant le haut polymère $(NPCl_2)_n$).

– RMN du 31 P:

Le spectre RMN du 31 P présente un pic à +16,6 ppm (référence: $H_3PO_4$ à 85%) charact-

ristique du motif $NPCl_2$, ce qui est en accord avec les résultats de ALLCOCK et al. (Inorg. Chem, 1965, 5, p. 1709). On note également l'absence de pics à −20 ppm et à +4,7 ppm caractéristiques de $(NPCl_2)_3$ et de $(NPCl_2)_4$.

– Spectroscopie UV:
Le spectre UV, par son absorption dans la région de 370 nm, confirme la formation de phosphazènes linéaires
– Chromatographie sur couche mince:
La chromatographie sur couche mince du produit brut résultant de la polycondensation, mise en œuvre suivant les indications de NOVOBILSKY et at. (Z. Anorg. Allg. Chem. 1975, 416, p. 187 et 1976, 423, p. 273) met en évidence la quasi-absence de phosphazènes cycliques.

D'autre part des mesures de température de transition vitreuse, effectuées par analyse enthalpique différentielle sur des polymères suivant l'invention de longueurs de chaînes différentes donnent toutes des valeurs situées au voisinage de −60 °C, le nombre de motifs récurrents $(NPCl_2)$ paraissant n'avoir qu'une influence très peu marquée sur ladite température.

Les dichlorothiophosphorylpolychlorophosphazènes suivant l'invention sont susceptibles de nombreuses applications industrielles aussi bien en eux-mêmes, comme indiqué précédemment, qu'en tant que matières de départ pour la préparation de polyorganophosphazènes en faisant appel aux réactions de substitutions suivantes:

On a pu ainsi obtenir les polymères ci-après: $(NP(OMe)_2)_n$; $(NP(OCH_2CF_3)_2)_n$; $(NP(OCH_2C_3F_7)_2)_n$; $(NP(OCH_2CF_3)(OCH_2C_3F_7))_n$, dont les propriétés sont remarquables, en particulier pour $(NP(OCH_2CF_3)(OCH_2C_3F_7))_n$ qui est un elastomère amorphe résistant à l'hydrolyse, à la chaleur, ainsi qu'à la plupart des solvants et produits chimiques, et qui sont utilisés dans l'industrie en tant qu'élastomères, matières thermoplastiques, éventuellement souples, aptes à fournir des films, et en tant que produits de remplacement du verre. L'invention procure en outre l'avantage de fournir un procédé de préparation de polychlorophosphazènes linéaires à longue chaîne qui est simple, rapide, quantitatif et peu onéreux.

L'invention est illustrée par les exemples suivants donnés à titre non limitatif.

Exemple 1

a) Synthèse de $P_2NSCl_5$:

On effectuait cette synthèse en préparant tout d'abord $P_3NCl_{12}$ par réaction de $PCl_5$ sur $NH_4Cl$ dans $POCl_3$ comme indiqué par SEGLIN et al. (Brevet américain N° 3 231 327), puis en faisant réagir le composé $P_3NCl_{12}$ obtenu avec $P_2S_5$ dans les conditions opératoires décrites par KHODAK et GILYAROV (Izv. Akad. Nauk. SSSR, Ser. Khim., 1979 (4), p. 924).

On opérait dans un réacteur pourvu d'un agitateur à ancre et surmonté de deux réfrigérants protégés de l'humidité atmosphérique par deux colonnes garnies de $P_2O_5$.

Dans le réacteur on introduisait 282 g (1,35 mole) de $PCl_5$, 29,2 g (0,54 mole) de $NH_4Cl$ et 180 ml (1,95 mole) de $POCl_3$. Le contenu du réacteur, maintenu sous agitation et en atmosphère inerte, était porté à 80 °C puis maintenu à cette température pendant 6 heures. Durant cette période se produisait un abondant dégagement d'HCl. On laissait ensuite le milieu réactionnel revenir à température ambiante, puis lui ajoutait 78,5 g (0,35 mole) de $P_2S_5$ et portait ensuite le tout à 80 °C pendant deux heures.

Le milieu réactionnel résultant était alors filtré et par évaporation sous vide du filtrat il restait un liquide se solidifiant à température ambiante à pression atmosphérique. Par distillation dudit liquide à 75–80 °C sous une pression réduite d'environ 13 Pa, on recueillait 45,75 g d'un produit consistant exclusivement en $P_2NSCl_5$, comme le montrait l'étude dudit produit par spectroscopie IR et par RMN du 31P.

b)– Polycondensation de $P_2NSCl_5$:

On opérait dans un réacteur muni d'un système d'agitation magnétique et surmonté d'une colonne VIGREUX, elle-même connectée à une ampoule graduée par l'intermédiaire d'un réfrigérant. L'ensemble de l'appareillage était protégé de l'humidité atmosphérique par des colonnes garnies de $P_2O_5$.

Dans le réacteur on introduisait 48,5 g (0,170 mole) de $P_2NSCl_5$, obtenu comme décrit dans la partie a) du présent exemple. Le contenu du réacteur, maintenu sous agitation modérée, était porté à une température comprise entre 220 et 240 °C, puis maintenu à cette température pendant 6 heures. Au cours de ce chauffage on observait un dégagement de $PSCl_3$ d'abord lent, puis s'accélérant après le départ d'environ la moitié du volume théorique susceptible d'être produit à partir de la quantité de $P_2NSCl_5$ utilisée.

Au bout des huit heures de chauffage, la quantité de $PSCl_3$ recueillie représentait 28,3 g (0,167 mole), ce qui correspond sensiblement à la quantité théorique de $PSCl_3$ susceptible d'être produite. A l'issue de cette période, le chauffage était encore poursuivi dans les mêmes conditions pendant 2 heures supplémentaires.

Le produit brut obtenu (20 g) était entièrement soluble dans le benzène, ce qui prouve l'absence de polychlorophosphazènes ramifiés.

L'analyse du produit pour $(NPCl_2)_n$ a donné les résultats suivants:

| | Cl | N | P |
|---|---|---|---|
| théorique: | 61,21% | 12,07% | 26,72% |
| trouvé: | 61,3% | 11,7% | 26,8% |

Le produit brut précité était traité à 40–60 °C par l'éther de pétrole, qui est un précipitant des hauts polymères $(NPCl_2)_n$ et un solvant des phosphazènes cycliques ainsi que des phosphazènes du type $Cl_2(S)P\ (NPCl_2)_nCl$ où n est petit (2 ou 3). On

solubilisait ainsi une fraction représentant environ 3% en poids du produit traité.

Un contrôle chromatographique (chromatographie en couche mince sur plaque de silice avec l'hexane comme diluant) de la fraction insoluble dans l'éther de pétrole montrait l'absence de $P_2NSCl_5$ résiduel et de phosphazènes cycliques.

La fraction insoluble dans l'éther de pétrole, qui était constituée par le polymère purifié, était dissoute dans le benzène anhydre et traitée par $CF_3CH_2ONa$ pour remplacer les atomes de chlore du polymère par des groupements $CF_3CH_2O-$ moins réactifs, ce qui permet d'obtenir un polymère plus facile à manipuler et sur lequel on peut effectuer des déterminations de masses moléculaires. Le traitement par $CF_3CH_2ONa$ était réalisé dans des conditions similaires à celles proposées par H.R. ALLCOCK et al. (Inorg. Chem. 1966, 5, p. 1714) pour le traitement correspondant des polydichlorophosphazènes.

Le polymère trifluoroéthoxylé obtenu avait une masse moléculaire moyenne en poids ($\overline{M}w$) égale à 440 000, une masse moléculaire moyenne en nombre ($\overline{M}n$) de 265 000 et un indice de polydispersité égale à 1,66. Le polymère correspondant issu de la polycondensation de $P_2NSCl_5$ avait une masse moléculaire moyenne en nombre égale à 126 600 ce qui correspond à une valeur moyenne du nombre n de motifs récurrents ($NPCl_2$) dans la formule (I) égale à environ 1090.

L'étude par fluorescence X du polymère résultant de la polycondensation montrait que ce dernier était exempt de soufre élémentaire. Le spectre IR et le spectre RMN du 31 P obtenus pour ledit polymère étaient également en accord avec une formule du type dichlorothiophosphorylpolychlorophosphazène linéaire pour le polymère, cette formule s'écrivant sous forme développée comme suit

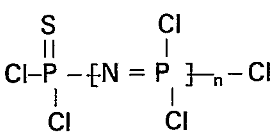 (III)

n ayant dans cet exemple une valeur moyenne d'environ 1090.

Exemple 2

On opérait dans un réacteur équipé comme décrit dans l'exemple 1.

Dans le réacteur on introduisait 20,5 g (0,072 mole) de $P_2NSCl_5$, préparé comme décrit dans la partie a) de l'exemple 1. Le contenu du réacteur, maintenu sous agitation modérée, était porté à une température d'environ 230 °C, puis maintenu à cette température pendant 6 heures.

Au bout de cette période on arrêtait la polycondensation, la quantité de $PSCl_3$ recueillie étant égale à 12,20 g. Cette quantité est légèrement supérieure à la quantité théorique (12,17 g) de $PSCl_3$ susceptible d'être libérée, par suite de la distillation d'une faible quantité de $P_2NSCl_5$.

Le produit brut (8,2 g) résultant de la polycondensation était entièrement soluble dans le benzène, ce qui prouve l'absence de polychlorophosphazènes ramifiés.

L'analyse du produit pour $(NPCl_2)_n$ a donnè les résultats suivants:

| | Cl | N | P |
|---|---|---|---|
| théorique: | 61,21% | 12,07% | 26,72% |
| trouvé: | 61,4% | 12,2% | 26,5% |

Le produit brut précité était traité à l'éther de pétrole à 40–60 °C et l'on solubilisait ainsi une fraction représentant moins de 4% en poids du produit traité.

Un contrôle chromatographique (chromatographie en couche mince sur plaque de silice avec l'hexane comme diluant) de la fraction insoluble dans l'éther de pétrole montrait l'absence de $P_2NSCl_5$ résiduel et de phosphazènes cycliques.

La fraction insoluble dans l'éther de pétrole, qui était formée par le polymère purifié, était dissoute dans le benzène anhydre et traitée par $CF_3CH_2ONa$ comme indiqué dans l'exemple 1.

Le polymère trifluoroéthoxylé obtenu avait une masse moléculaire moyenne en nombre égale à 25 000. Le polymère correspondant issu de la polycondensation de $P_2NSCl_5$ présentait une masse moléculaire moyenne en nombre égale à 11 900, ce qui correspond à une valeur moyenne du nombre n dans la formule (I) égale à 101.

L'étude par fluorescence X du polymère résultant de la polycondensation montrait que ce dernier ne renfermait pas de soufre élémentaire. Le spectre IR et le spectre RMN du 31 P obtenus pour ledit polymère étaient également en accord avec une formule du type dichlorothiophosphorylchlorophosphazène linéaire comme représentée par la formule (I) ou la formule développée correspondante (III) avec n ayant une valeur moyenne égale à 101.

Exemple 3

On opérait dans un réacteur équipé comme décrit dans l'exemple 1.

Dans le réacteur on introduisait 48,5 g (0,170 mole) de $P_2NSCl_5$, préparé comme indiqué dans la partie a) de l'exemple 1. Le contenu du réacteur, maintenu sous agitation modérée, était porté à une température d'environ 230 °C, puis maintenu à cette température pendant 6 heures.

Au bout de cette période, on arrêtait la polycondensation, la quantité de $PSCl_3$ recueillie étant égale à 26,3 g.

Le produit brut (22 g) résultant de la polycondensation était entièrement soluble dans le benzène, ce qui prouve l'absence de polychlorophosphazènes ramifiés.

L'analyse du produit pour $(NPCl_2)_n$ a donné les résultats suivants:

| | Cl | N | P |
|---|---|---|---|
| théorique: | 61,21% | 12,07% | 26,72 |
| trouvé: | 61,2% | 12,3% | 26,6% |

Le produit brut susmentionné était traité à l'éther de pétrole à 40–60 °C et l'on solubilisait ainsi une fraction représentant moins de 5% en poids du produit traité.

Un contrôle chromatographique de la fraction insoluble dans l'éther de pétrole, réalisé comme indiqué dans l'exemple 1, montrait l'absence de $P_2NSCl_5$ résiduel et de phosphazènes cycliques.

La fraction insoluble dans l'éther de pétrole, qui était constituée par le polymère purifié, était dissoute dans le benzène anhydre et traitée par $CF_3CH_2ONa$ comme indiqué dans l'exemple 1.

Le polymère trifluoroéthoxylé obtenu avait une masse moléculaire moyenne en nombre égale à 3300. Le polymère correspondant issu de la polycondensation de $P_2NSCl_5$ présentait une masse moléculaire moyenne en nombre égale à 1600, ce qui correspond à une valeur moyenne du nombre n dans la formule (I) égale à 12.

Le spectre IR et le spectre RMN 31 P obtenus pour le polymère résultant de la polycondensation étaient en accord avec une formule du type dichlorothiophosphorylchlorophosphazène linéaire comme représentée par la formule brute (I) ou la formule développée correspondante (III) avec, dans cet exemple, n ayant une valeur moyenne égale à 12.

De plus ledit polymère ne renfermait pas de soufre élémentaire comme il apparaissait à l'étude du produit par fluorescence X.

## Revendications

1. Polychorophosphazènes linéaires possédant un groupement terminal dichlorothiophosphoryle, caractérisé en ce qu'ils répondent à la formule

$$Cl_2(S)P{-}(NPCl_2)_nCl$$

dans laquelle n est un nombre égal ou supérieur à 4, la valeur de n pouvant être contrôlée por l'obtention de chaînes de toutes longueurs moyennes désirées.

2. Polychlorophosphazènes suivant la revendication 1, caractérisés en ce que la valeur de n va de 4 à 5000.

3. Procédé pour la préparation de polychlorophosphazènes linéaires possédant un groupement terminal dichlorothiophophoryle, caractérisé en ce que l'on polycondense $P_2NSCl_5$ par chauffage dans des conditions de pression allant de 10 Pa à $10^6$ Pa et de température d'au moins 120 °C propres à libérer $PSCl_3$, avec contrôle de la quantité de $PSCl_3$ libérée pour atteindre au moins 75% de la quantité molaire de $P_2NSCl_5$ soumise à la polycondensation de manière à obtenir un dichlorothiophosphorylpolychlorophosphazène ayant une masse moléculaire moynne en nombre supérieure à 630.

4. Procédé suivant la revendication 3, caractérisé en ce que l'on contrôle la quantité de $PSCl_3$ libérée de manière à obtenir un dichlorothiophosphorylpolychlorophosphazène ayant une masse moléculaire moyenne en nombre allant de 630 à 600 000.

5. Procédé suivant la revendication 3 ou 4, caractérisé en ce que la quantité contrôlée de $PSCl_3$ libérée par chauffage de $P_2NSCl_5$ représente au moins 90% de la quantité molaire de $P_2NSCl_5$ soumise à la polycondensation.

6. Procédé suivant l'une des revendications 3 à 5, caractérisé en ce que la polycondensation est mise en œuvre à pression atmosphérique.

7. Procédé suivant l'une des revendiactions 3 à 5, caractérisé en ce que la polycondensation est mise en œuvre sous des pressions allant de 10 Pa à $10^5$ Pa.

8. Procédé suivant l'une des revendications 3 à 5, caractérsisé en ce que la polycondensation est mise en œuvre sous pression réduite, notamment entre 10 Pa et $35 \times 10^3$ Pa et de préférence entre 50 Pa et $20 \times 10^3$ Pa.

9. Procédé suivant l'une des revendications 3 à 5, caractérisé en ce que la polycondensation est effectuée en partie à pression atmosphérique et en partie sous pression réduite.

10. Procédé suivant l'une des revendications 3 à 5, caractérisé en ce que la polycondensation débute à la pression atmosphérique et se poursuit sous pression réduite comprise notamment entre 10 Pa et $35 \times 10^3$ Pa, et plus particulièrement entre 50 Pa et $20 \times 10^3$ Pa.

11. Procédé suivant la revendication 10, caractérisé en ce que la durée de la polycondensation à pression atmosphérique représente environ 70 à 90% de la durée totale de polycondensation, tandis que la durée de la polycondensation sous pression réduite représente environ 30 à 10% de ladite durée totale.

12. Procédé suivant la revendication 6, caractérisé en ce que la température de polycondensation est d'au moins 150 °C et va plus particulièrement de 160 °C à 350 °C.

13. Procédé suivant la revendication 7, caractérisé en ce que la température de polycondensation est d'au moins 150 °C, ladite température allant tout particulièrement de 160 °C à 350 °C et plus spécialement de 170 °C à 300 °C.

14. Procédé suivant la revendication 8, caractérisé en ce que la température de polycondensation est choisie de 140 °C à 250 °C.

15. Procédé suivant l'une des revendications 9 à 11, caractérisé en ce que la phase de polycondensation à pression atmosphérique est réalisée à des températures d'au moins 150 °C, et plus particulièrement allant de 160 °C à 350 °C, tandis que la phase de polycondensation sous pression réduite est mise en œuvre à des températures d'au moins 120 °C, et plus spécialement allant de 140 °C à 350 °C.

16. Procédé suivant l'une des revendications 3 à 15, caractérisé en ce que la polycondensation est initiée à une température allant de 240 °C à 350 °C pendant une durée allant de 10 à 30% de la durée totale de la polycondensation, puis la température du milieu réactionnel est abaissée graduellement jusqu'à une valeur allant de 150 °C à 235 °C et ensuite maintenue à cette valeur jusqu'à la fin de la polycondensation.

17. Procédé suivant l'une des revendications 3

à 16, caractérisé en ce que la polycondensation est réalisée, au moins en partie, sous un courant de gaz inerte.

18. Procédé suivant l'une des revendications 3 à 17, caractérisé en ce que la polycondensation est réalisée sous agitation.

19. Procédé suivant l'une des revendications 3 à 18, caractérisé en ce que le produit brut issu de la polycondensation est purifié par traitement au moyen d'un solvant des phosphazènes cycliques, qui est en même temps solvant des polychlorophosphazènes linéaires à chaîne courte.

20. Utilisation des dichlorothiophosphoryl-polychlorophosphazènes suivant la revendication 1 ou 2 à la preparation des polyorganophosphazènes correspondants par substitution des atomes de chlore par des restes organiques monovalents.

**Patentansprüche**

1. Geradkettige Polychlorphosphazene mit einer endständigen Dichlorthiophosphorylgruppe, dadurch gekennzeichnet, dass sie der Formel

$$Cl_2(S)P-(NPCl_2)_nCl$$

entsprechen, worin n 4 oder eine Zahl darüber bedeutet, wobei der Wert n entsprechend jeder beliebigen gewünschten durchschnittlichen Kettenlänge gewählt werden kann.

2. Polychlorphosphazene nach Anspruch 1, dadurch gekennzeichnet, dass n 4 bis 5000 beträgt.

3. Verfahren zur Herstellung von Polychlorphosphazenen mit einer endständigen Dichlorthiophosphorylgruppe, dadurch gekennzeichnet, dass man $P_2NSCl_5$ durch Erwärmung unter einem Druck von 10 bis $10^6$ Pa und einer Temperatur von wenigstens 120 °C zur Freisetzung von $PSCl_3$ kondensiert, wobei man die Menge an freigesetztem $PSCl_3$ so steuert, dass wenigstens 75% der Molarmenge an $P_2NSCl_5$ polykondensiert werden, um ein Dichlorthiophosphorylpolychlorphosphazen mit einer numerischen Durchschnittsmolekularmasse von über 630 zu erhalten.

4. Verfahren nach Anspruch 3, dadurch gekennzeichnet, dass man die Menge an freigesetztem $PSCl_3$ so steuer, dass man ein Dichlorthiophosphorylpolychlorphosphazen mit einer numerischen Durchschnittsmolekularmasse von 630 bis 600 000 erhält.

5. Verfahren nach Anspruch 3 oder 4, dadurch gekennzeichnet, dass die durch Erwärmung von $P_2NSCl_5$ freigesetzte Menge $PSCl_3$ so gesteuert wird, dass sie wenigstens 90% der molaren Menge an der Polykondensation unterworfenem $P_2NSCl_5$ ausmacht.

6. Verfahren nach einem der Ansprüche 3 bis 5, dadurch gekennzeichnet, dass man die Polykondensation bei Atmosphärendruck durchführt.

7. Verfahren nach einem der Ansprüche 3 bis 5, dadurch gekennzeichnet, dass man die Polykondensation bei Drücken von 10 bis $10^5$ Pa durchführt.

8. Verfahren nach einem der Ansprüche 3 bis 5, dadurch gekennzeichnet, dass man die Polykondensation bei verminderten Drücken, und zwar zwischen 10 und $35 \times 10^3$ Pa und vorzugsweise bei 50 bis $20 \times 10^3$ Pa durchführt.

9. Verfahren nach einem der Ansprüche 3 bis 5, dadurch gekennzeichnet, dass man die Polykondensation teils unter Atmosphärendruck und teils unter vermindertem Druck durchführt.

10. Verfahren nach einem der Ansprüche 3 bis 5, dadurch gekennzeichnet, dass man die Polykondensation zuerst bei Atmosphärendruck und dann unter vermindertem Druck, und zwar bei 10 Pa bis $35 \times 10^3$ Pa und insbesondere bei 50 Pa bis $20 \times 10^3$ Pa durchführt.

11. Verfahren nach Anspruch 10, dadurch gekennzeichnet, dass die Dauer der Polykondensation bei Atmosphärendruck ca. 70 bis 90% der Gesamtdauer der Polykondensation ausmacht, wohingegen die Dauer der Polykondensation unter vermindertem Druck 30 bis 10% der Gesamtdauer ausmacht.

12. Verfahren nach Anspruch 6, dadurch gekennzeichnet, dass die Polykondensationstemperatur wenigstens bei 150 °C liegt und insbesondete bei 160 bis 350 °C.

13. Verfahren nach Anspruch 7, dadurch gekennzeichnet, dass die Polykondensationstemperatur wenigstens bei 150 °C liegt, insbesondere bei 160 bis 360 °C und vorzugsweise bei 170 bis 300 °C.

14. Verfahren nach Anspruch 8, dadurch gekennzeichnet, dass die Polykondensationstemperatur bei 140 bis 250 °C liegt.

15. Verfahren nach einem der Ansprüche 9 bis 11, dadurch gekennzeichnet, dass die Phase der Polykondensation bei Atmosphärendruck bei Temperaturen von wenigstens 150 °C und insbesondere bei 160 bis 350 °C durchgeführt wird, während die Phase der Polykondensation unter vermindertem Druck bei Temperaturen von wenigstens 120 °C und insbesondere bei 140 bis 350 °C durchgeführt wird.

16. Verfahren nach einem der Ansprüche 3 bis 15, dadurch gekennzeichnet, dass die Polykondensation bei Temperaturen von 240 bis 350 °C während einer Daurer von 10 bis 30% der Gesamtdauer der Polykondensation durchgeführt wird, wonach die Temperatur des Reaktionsmediums allmählich auf einen Wert zwischen 150 °C und 235 °C herabgesetzt und schliesslich bei diesem Wert bis zum Abschluss der Polykondensation gehalten wird.

17. Verfahren nach einem der Ansprüche 3 bis 16, dadurch gekennzeichnet, dass die Polykondensation wenigstens teilweise unter einem Inertgasstrom durchgeführt wird.

18. Verfahren nach einem der Ansprüche 3 bis 17, dadurch gekennzeichnet, dass die Polykondensation unter Rühren durchgeführt wird.

19. Verfahren nach einem der Ansprüche 3 bis 18, dadurch gekennzeichnet, dass das Rohprodukt der Polykondensation durch Behandlung mit einem Lösungsmittel für cyclische Phosphazene, das gleichzeitig auch ein Lösungsmittel für unverzweigte kurzkettige Polychlorphosphazene ist, gereinigt wird.

20. Verwendung der Dichlorthiophosphorylpolychlorphosphazene nach Anspruch 1 oder 2 für die Herstellung der entsprechenden Polyorganophosphazene durch Substitution der Chloratome durch einwertige organische Reste.

**Claims**

1. Linear polychlorophosphazenes having a dichlorothiophosphoryl terminal group, characterised in that they are represented by the formula

$$Cl_2(S)P-(NPCl_2)_n-Cl$$

wherein n is a number equal to or above 4, the value of n being controllable to enable the production of chains of any desired medium length.

2. Polychlorophosphazenes according to claim 1, characterised in that the value of n ranges from 4 to 5000.

3. A process for the preparation of linear polychlorophosphazenes having a dichlorothiophosphoryl terminal group, characterised in that it comprises polycondensing $P_2NSCl_5$ by heating under pressures from 10 Pa to $10^6$ Pa and at temperatures of at least 120 °C so as to release $PSCl_3$, with control of the amount of $PSCl_3$ released so that said amount corresponds at least to 75% of the molar quantity of $P_2NSCl_5$ subjected to polycondensation so as to obain a dichlorothiophosphoryl polychlorophosphazene havine a number average molecular weight higher than 630.

4. A process according to claim 3, characterised in that the amount of released $PSCl_3$ is controlled so as to obtain a dichlorothiophosphoryl polychlorophosphazene having a number average molecular weight between 630 and 600 000.

5. A process.according to claim 3 or 4, characterised in that the controlled amount of $PSCl_3$ released by heating $P_2NSCl_5$ represents at least 90% of the molar quantity of $P_2NSCl_5$ subjected to polycondensation.

6. A process according to any of claims 3 to 5, characterised in that the polycondensation is carried out at atmospheric pressure.

7. A process according to any of claims 3 to 5, characterised in that the polycondensation is carried out under pressures ranging from 10 Pa to $10^5$ Pa.

8. A process according to any of claims 3 to 5, characterised in that the polycondensation is carried out under reduced pressure, among others between 10 Pa and $35 \times 10^3$ Pa and preferably between 50 Pa and $20 \times 10^3$ Pa.

9. A process according to any of claims 3 to 5, characterised in that the polycondensation is carried out partly under atmospheric pressure and partly under reduced pressure.

10. A process according to any of claims 3 to 5, characterised in that the polycondensation starts at about atmospheric pressure and continues under a reduced pressure, among others between 10 Pa and $35 \times 10^3$ Pa and more particularly between 50 Pa and $20 \times 10^3$ Pa.

11. A process according to claim 10, characterised in that the time of polycondensation under atmospheric pressure is from about 70 to 90% of the total time of polycondensation, while the time of polycondensation under reduced pressure is from about 30 to 10% of said total time of polycondensation.

12. A process according to claim 6, characterised in that the polycondensation temperature is at least 150 °C, and more particularly ranges from 160 °C to 350 °C.

13. A process according to claim 7, characterised in that the polycondensation temperature is at least 150 °C, said temperature ranging more particularly from 160 °C to 350 °C and especially from 170 °C to 300 °C.

14. A process according to claim 8, characterised in that the polycondensation temperature ranges from 140 °C to 250 °C.

15. A process according to any of claims 9 to 11, characterised in that the phase of polycondensation under atmospheric pressure is carried out at temperatures of at least 150 °C and more particularly ranging from 160 °C to 350 °C, while the phase of polycondensation under reduced pressure is carried out at temperatures of at least 120 °C and more particularly ranging from 140 °C to 350 °C.

16. A process according to any of claims 3 to 15, characterised in that the polycondensation is started at a temperature of from 240 °C to 350 °C for a time ranging from 10 to 30% of the total time of the polycondensation, the temperature of the reaction medium is then gradually lowered to a value of from 150 °C to 235 °C and thereafter maintained at this value until the end of the polycondensation.

17. A process according to any of claims 3 to 16, characterised in that the polycondensation is carried out, at least partly, under an inert gas stream.

18. A process according to any of claims 3 to 17, characterised in that the polycondensation is carried out under stirring.

19. A process according to any of claims 3 to 18, characterised in that the net product resulting from the polycondensation is purified by treatment with a solvent for cyclic polychlorophosphazenes, which is at the same time a solvent for the short chain linear polychlorophosphazenes.

20. Use of the dichlorothiophosphoryl polychlorophosphazenes according to claim 1 or 2 for preparing corresponding polyorganophosphazenes by substituting monovalent organic radicals for the chlorine atoms of said polychlorophosphazenes.